# EUROPEAN PATENT APPLICATION

(11) **EP 4 618 449 A2**
(43) Date of publication of application: **17.09.2025**
(21) Application number: 25161279.2
(22) Date of filing: 03.03.2025
(51) Int. Cl.: H04B 17/26, H04B 17/318, H04W 24/08

(54) **SYSTEMS AND METHODS FOR WIDEBAND SPECTRUM ANALYSIS AND MANAGEMENT**

(30) Priority: 11.03.2024 US 202418601721
(71) Applicant: Avago Technologies International Sales Pte. Limited, Singapore 768923 (SG)
(72) Inventor: Zhou, Jun, Irvine, CA 92602 (US); Cattivelli, Federico, Rancho Santa Margarita, CA 92688 (US); Kim, Hea Joung, Irvine, CA 92620 (US)
(74) Representative: Grünecker Patent- und Rechtsanwälte PartG mbB

(57) **Abstract**

The subject technology is directed to wireless communication systems and methods. In an embodiment, the subject technology provides an apparatus that includes a receiver configured to receive a first signal and an analyzer configured to generate a spectrum representation of the first signal. The analyzer is further configured to perform accumulation by averaging magnitudes of frequency components over multiple timestamps, enhancing the signal-to-noise ratio and providing a stable representation of the first signal's power density. Embodiments of the subject technology improve the analysis and management of wireless signals, leading to robust and efficient wireless communication by mitigating interference and optimizing frequency usage. There are other embodiments as well.

## Description

### FIELD OF INVENTION

The subject technology is directed to wireless communication systems and methods.

### BACKGROUND OF THE INVENTION

Wireless communication systems have become increasingly prevalent across various sectors, including telecommunications, data transmission, and internet connectivity. These systems rely heavily on the efficient management of the radio frequency (RF) spectrum to ensure reliable and high-speed communication. Various approaches involve the use of spectrum analyzers, which measure the frequency and amplitude of signals in the electromagnetic spectrum. Spectrum analyzers function by capturing and converting incoming signals into a frequency spectrum, providing visual representations of both the spectrum and signal strength. They play an important role in optimizing network configurations by identifying the most suitable frequency bands and channels for operation, thereby reducing conflicts and minimizing interference. However, as the density of wireless devices and the demand for data throughput increase, effectively managing and optimizing the use of the spectrum remains a significant challenge.

Unfortunately, existing technologies are inadequate, for the reasons explained below. New and improved methods and systems are desired.

### BRIEF DESCRIPTION OF THE DRAWINGS

A further understanding of the nature and advantages of particular embodiments may be realized by reference to the remaining portions of the specification and the drawings, in which like reference numerals are used to refer to similar components. In some instances, a sub-label is associated with a reference numeral to denote one of multiple similar components. When reference is made to a reference numeral without specification to an existing sub-label, it is intended to refer to all such multiple similar components.
Figure 1 is a simplified diagram illustrating a wireless environment suitable for implementing various embodiments of the subject technology.
Figure 2 is a simplified diagram illustrating a receiver according to the embodiments of the subject technology.
Figure 3 is a simplified diagram illustrating an analyzer according to the embodiments of the subject technology.
Figure 4 is a simplified diagram illustrating an analyzer according to the embodiments of the subject technology.

### DETAILED DESCRIPTION OF THE INVENTION

The subject technology is directed to wireless communication systems and methods. In an embodiment, the subject technology provides an apparatus that includes a receiver configured to receive a first signal and an analyzer configured to generate a spectrum representation of the first signal. The analyzer is further configured to perform accumulation by averaging magnitudes of frequency components over multiple timestamps, enhancing the signal-to-noise ratio and providing a stable representation of the first signal's power density. Embodiments of the subject technology improve the analysis and management of wireless signals, leading to robust and efficient wireless communication by mitigating interference and optimizing frequency usage. There are other embodiments as well.

The growing adoption of wireless technologies in diverse applications has led to increased congestion in the radio spectrum, such as in widely used bands like 2.4 GHz, 5 GHz, or 6-7GHz. This congestion creates challenges for coexistence and performance optimization, as multiple devices compete for limited resources. As a result, available spectrum has become a valuable resource that must be efficiently utilized. Various approaches for spectrum management involve the use of wideband receivers and spectrum analyzers. For example, the term "wideband receiver" may refer to a device capable of capturing and processing signals over a wide frequency range, such as from tens of MHz to several GHz. The term "spectrum analyzer" may refer to a device that measures the magnitude and frequency of an input signal over a specified frequency range. Spectrum analyzers can provide power estimation of a signal across different frequency components, allowing the system to optimize network configuration by selecting the optimal frequency bands and channels for operation.

Despite the advancements, many techniques for signal reception and spectrum analysis face limitations, especially in dynamic and congested RF environments. For instance, in environments where WLAN and Bluetooth devices coexist, the high density of wireless communication increases the collision rate of data packets. A collision occurs when two or more devices transmit data on the same radio channel in overlapping periods, resulting in packet corruption or loss.

To mitigate the risk of collisions, various techniques have been explored. For example, Bluetooth technology implements adaptive frequency hopping (AFH) to manage data communication among devices. The term "adaptive frequency hopping" may refer to a mechanism that dynamically selects communication channels based on the level of interference detected on each channel. However, such methods often suffer from latency and increased power consumption due to the need to sequentially scan each channel and measure the received signal strength indicator (RSSI). Additionally, the exclusion of channels from the AFH list due to detected interference can lead to long delays before they can be re-assessed and potentially re-added. These delays can lead to the underutilization of the available spectrum and reduced throughput. Moreover, AFH techniques often assess the quality of Bluetooth channels at discrete time slots, resulting in a lack of real-time adaptability and an incomplete overview of the spectral environment.

As explained above, improved methods and systems for wireless communication are provided. In various embodiments, the subject technology provides a system that integrates a wideband receiver with a spectrum analyzer to provide efficient signal processing and management. This integration facilitates a comprehensive and rapid analysis of the RF spectrum, enabling the system to promptly adapt to the dynamic conditions of the RF environment. The wideband receiver is designed to cover broad frequency ranges, thereby reducing the hardware complexity and power consumption typically associated with separate receiver chains for different bands. The spectrum analyzer assesses the power levels across the entire bandwidth through an on-chip implementation, providing a comprehensive analysis of the spectrum in real time. By evaluating the entire bandwidth simultaneously, the analyzer not only offers a detailed power profile of the spectrum but also enables faster decision-making for dynamic frequency selection, thus mitigating interference and enhancing overall communication quality.

Embodiments of the subject technology can be integrated into various wireless communication systems and applications. For example, the subject technology can be incorporated into modern telecommunications infrastructure, enhancing the efficiency and reliability of 5G and future 6G networks by rapidly identifying and selecting optimal communication channels. Additionally, it can be applied in consumer electronics to accelerate Bluetooth device connectivity and improve automatic gain control in smart devices, ensuring a robust and interference-free user experience even in environments heavily saturated with competing wireless signals.

The following description is presented to enable one of ordinary skill in the art to make and use the invention and to incorporate it in the context of particular applications. Various modifications, as well as a variety of uses in different applications, will be readily apparent to those skilled in the art, and the general principles defined herein may be applied to a wide range of embodiments. Thus, the subject technology is not intended to be limited to the embodiments presented but is to be accorded the widest scope consistent with the principles and novel features disclosed herein.

In the following detailed description, numerous specific details are set forth in order to provide a more thorough understanding of the subject technology. However, it will be apparent to one skilled in the art that the subject technology may be practiced without necessarily being limited to these specific details. In other instances, well-known structures and devices are shown in block diagram form, rather than in detail, in order to avoid obscuring the subject technology.

The reader's attention is directed to all papers and documents which are filed concurrently with this specification and which are open to public inspection with this specification, and the contents of all such papers and documents are incorporated herein by reference. All the features disclosed in this specification, (including any accompanying claims, abstract, and drawings) may be replaced by alternative features serving the same, equivalent or similar purpose, unless expressly stated otherwise. Thus, unless expressly stated otherwise, each feature disclosed is one example only of a generic series of equivalent or similar features.

Furthermore, any element in a claim that does not explicitly state "means for" performing a specified function, or "step for" performing a specific function, is not to be interpreted as a "means" or "step" clause as specified in 35 U.S.C. Section 112, Paragraph 6. In particular, the use of "step of" or "act of" in the Claims herein is not intended to invoke the provisions of 35 U.S.C. 112, Paragraph 6.

When an element is referred to herein as being "connected" or "coupled" to another element, it is to be understood that the elements can be directly connected to the other element, or have intervening elements present between the elements. In contrast, when an element is referred to as being "directly connected" or "directly coupled" to another element, it should be understood that no intervening elements are present in the "direct" connection between the elements. However, the existence of a direct connection does not exclude other connections, in which intervening elements may be present.

Moreover, the terms left, right, front, back, top, bottom, forward, reverse, clockwise and counterclockwise are used for purposes of explanation only and are not limited to any fixed direction or orientation. Rather, they are used merely to indicate relative locations and/or directions between various parts of an object and/or components.

Furthermore, the methods and processes described herein may be described in a particular order for ease of description. However, it should be understood that, unless the context dictates otherwise, intervening processes may take place before and/or after any portion of the described process, and further various procedures may be reordered, added, and/or omitted in accordance with various embodiments.

Unless otherwise indicated, all numbers used herein to express quantities, dimensions, and so forth should be understood as being modified in all instances by the term "about." In this application, the use of the singular includes the plural unless specifically stated otherwise, and use of the terms "and" and "or" means "and/or" unless otherwise indicated. Moreover, the use of the terms "including" and "having," as well as other forms, such as "includes," "included," "has," "have," and "had," should be considered non-exclusive. Also, terms such as "element" or "component" encompass both elements and components comprising one unit and elements and components that comprise more than one unit, unless specifically stated otherwise.

As used herein, the phrase "at least one of" preceding a series of items, with the term "and" or "or" to separate any of the items, modifies the list as a whole, rather than each member of the list (i.e., each item). The phrase "at least one of" does not require the selection of at least one of each item listed; rather, the phrase allows a meaning that includes at least one of any one of the items, and/or at least one of any combination of the items. By way of example, the phrases "at least one of A, B, and C" or "at least one of A, B, or C" each refer to only A, only B, or only C; and/or any combination of A, B, and C. In instances where it is intended that a selection be of "at least one of each of A, B, and C," or alternatively, "at least one of A, at least one of B, and at least one of C," it is expressly described as such.

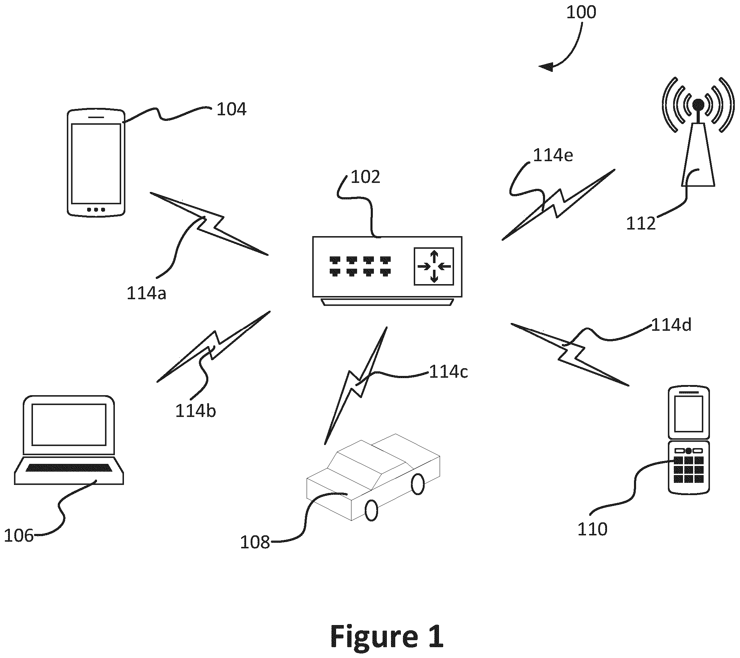

Figure 1 is a simplified diagram illustrating a wireless environment 100 suitable for implementing various embodiments of the subject technology. This diagram merely provides an example, which should not unduly limit the scope of the claims. One of ordinary skill in the art would recognize many variations, alternatives, and modifications.

As shown, wireless environment 100 may include a plurality of devices that communicate wirelessly with each other. For instance, wireless environment 100 includes router 102, which provides wireless connectivity and network access to the plurality of devices. The plurality of devices may include, without limitation, smartphone 104, laptop 106, vehicle 108, cellphone 110, and/or other mobile or stationary devices that support wireless communication. In various implementations, wireless environment 100 further includes an access point (AP) 112, which connects wireless environment 100 to the internet or other networks. The plurality of devices may generate a plurality of RF signals 114a, 114b, 114c, 114d, 114e to communicate with each other. The plurality of RF signals may include, without limitation, cellular signals, Wi-Fi signals, GPS signals, Bluetooth signals, radio signals, TV signals, 5G signals, and/or the like.

Depending on the implementation, wireless communication may operate on different frequency bands, such as 2.4 GHz, 5 GHz, and/or the like. The RF signals 114a-e transmitted by these devices may vary in their attributes, such as frequency, power level, modulation schemes, and/or the like. For instance, smartphone 104 may communicate via a Wi-Fi signal at 2.4 GHz with a low power level (e.g., -50dBm to 65dBm) for data transmission. Vehicle 108 may use a dedicated short-range communications (DSRC) signal at 5.9 GHz for communication, which requires a higher power level (e.g., 13dBm to 30dBm) to ensure reliable connectivity over greater distances. In various implementations, a device may use various communications with different frequencies depending on the application and the availability of the spectrum. For example, smartphone 104 may communicate over 2.4 GHz for Bluetooth connections and switch to 5 GHz for Wi-Fi when more bandwidth is needed.

The coexistence of multiple devices transmitting on different frequencies and power levels can lead to various operational challenges, such as interference or overlaps. Interference may occur when occurs when an unwanted signal affects the quality or performance of a desired signal, leading to signal degradation or data loss. Overlap may occur when the frequency bands used by different wireless signals partially or fully coincide with each other, causing interference and degradation of the signal quality.

To address these challenges, spectrum analysis and management may be employed to ensure effective wireless communication. In various examples, spectrum analysis be performed by a receiver, an analyzer, or a combination of both. The term "receiver" may refer to a device capable of capturing and processing signals over a certain frequency or a range of frequencies. The term "analyzer" may refer to a device that measures the magnitude and frequency of an input signal over a specified frequency range, providing a visual representation of the spectrum usage and the signal quality. For instance, a wireless device (e.g., smartphone 104, laptop 106, vehicle 108, cellphone 110) may include a receiver and/or an analyzer to monitor the RF environment. A receiver may detect and identify desired signals for communication and perform gain control to avoid signal saturation or distortion. An analyzer may measure and display the characteristics of the signals, such as the frequency, power, bandwidth, etc. This allows the system to dynamically adjust operational parameters and optimize network configuration, such as AFH scan acceleration, received signal strength indicator (RSSI) calibration acceleration, automatic gain control (AGC) optimization, and/or the like.

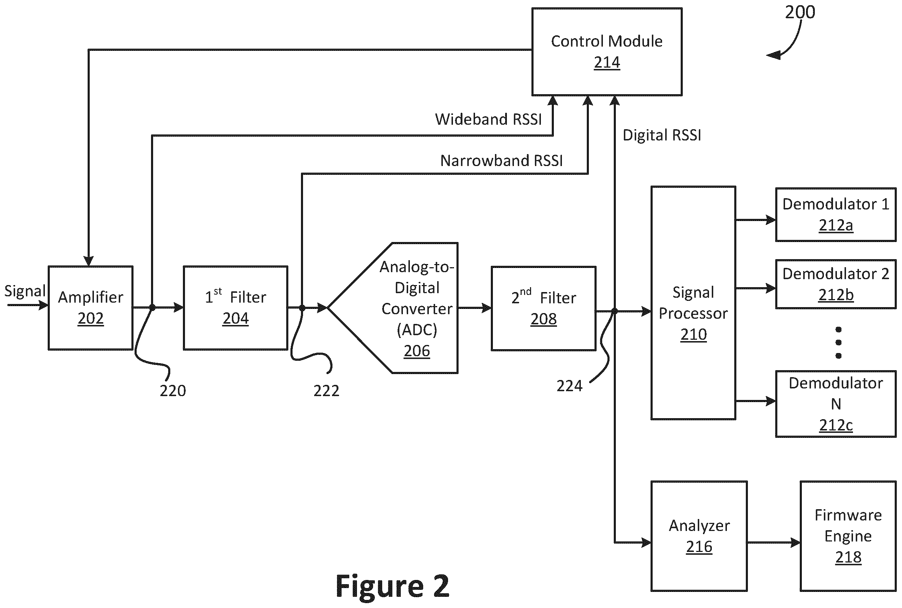

Figure 2 is a simplified diagram illustrating a receiver 200 according to the embodiments of the subject technology. This diagram merely provides an example, which should not unduly limit the scope of the claims. One of ordinary skill in the art would recognize many variations, alternatives, and modifications.

Depending on the application, receiver 200 may be integrated into a chip or implemented as a standalone device to capture and process signals over a certain frequency or a range of frequencies. For example, receiver 200 may include a wideband receiver. The term "wideband receiver" may refer to a device capable of detecting, processing, and analyzing a wide range of frequencies simultaneously. For example, a wideband receiver may cover the entire 2.4 GHz band, 5 GHz band, 5.9 GHz band, or 6-7GHz band, and can be used in Wi-Fi, Bluetooth, radar, satellite, cellular communications, and/or other forms of wireless communications. In various embodiments, receiver 200 includes at least one of amplifier 202, first filter 204, analog-to-digital converter (ADC) 206, second filter 208, signal processor 210, control module 214, analyzer 216, firmware engine 218, one or more demodulators 212a, 212b, 212c, and/or the like.

In various implementations, receiver 200 is configured to receive a first signal. For example, the first signal may be received from a transmitting antenna or a wireless communication device. The first signal may include an RF signal, which may include, without limitation, a cellular signal, a Wi-Fi signal, a GPS signal, a Bluetooth signal, a radio signal, a TV signal, a 5G signal, and/or the like. In some cases, the first signal may be received and processed by amplifier 202. For instance, the term "amplifier" may refer to a device that increases the amplitude or power of a signal (e.g., by using a transistor or an op-amp). Amplifier 202 may include, without limitation, a low-noise amplifier (LNA), power amplifier (PA), variable gain amplifier (VGA), broadband amplifier, gain block amplifier, log amplifier, and/or the like. For example, the term "low-noise amplifier" may refer to a device that amplifies a low-power signal without significantly degrading its signal-to-noise ratio (SNR). An LNA may be configured to minimize additional noise and strengthen desired signals to levels suitable for further processing without significant degradation of the SNR.

In some embodiments, first filter 204 is coupled to amplifier 202 through first node 220. For instance, the term "filter" may refer to a device that modifies the frequency spectrum of a signal. The term "node" may refer to a point in a circuit where two or more components can be connected. In some cases, first filter 204 may be configured to filter the first signal by allowing signals within a certain frequency range to pass through while attenuating frequencies outside that range. First filter 204 may include, without limitation, a band-pass filter (BPF), a digitally tunable filter, a reflectionless filter, an ultra-wideband (UWB) filter, and/or the like. The term "band-pass filter" may refer to a device that allows signals within a specific frequency range to pass while reducing the strength of signals outside that range. For example, first filter 204 helps receiver 200 to select desired signal bands (e.g., 2.4 GHz or 5 GHz band) from a broad spectrum of frequencies, depending on the operational requirements and desired performance characteristics of the system.

In various examples, first filter 204 may be coupled to ADC 206 through second node 222. For instance, the term "analog-to-digital converter" may refer to a device that converts an analog signal into a digital signal. ADC 206 may be configured to sample the filtered first signal and convert it into a digital format for further processing. In some embodiments, ADC 206 may be coupled to second filter 208. For instance, second filter 208 may include a decimation filter. The term "decimation filter" may refer to a type of filter that reduces the sampling rate of a signal by discarding some of its samples. Second filter 208 may be configured to selectively decrease the rate of data points in the first signal to reduce the computational load on downstream processing units (e.g., signal processor 210). In some cases, second filter 208 may be configured to reduce a sampling rate of the digital signal generated by ADC 206.

Depending on the implementation, second filter 208 may be coupled to signal processor 210 through a third node 224. The term "signal processor" may refer to a device or circuit that performs various mathematical or computational algorithms on a signal. For example, signal processor 210 may include, without limitation, a digital processor, a digital rotator, a Fast Fourier Transform (FFT) processor, a digital mixer, a digital filter, a modulator, a demodulator, and/or the like. In some examples, signal processor 210 is configured to adjust the digital signal's frequency to the desired baseband frequency for demodulation.

According to some embodiments, signal processor 210 may be coupled to one or more demodulators (e.g., 212a, 212b, ..., 212c) to demodulate the processed digital signal into a format suitable for subsequent decoding and interpretation. The term "demodulator" may refer to a device that extracts information from a carrier wave by reversing the modulation process. Depending on the implementation, demodulators (e.g., 212a, 212b, ..., 212c) may adopt various types of demodulation schemes, such as phase modulation (PM), amplitude modulation (AM), frequency modulation (FM), quadrature amplitude modulation (QAM), and/or the like. In some cases, the output from signal processor 210 may be split into multiple paths leading to each demodulator to accommodate different signal types and modulation schemes. This multi-path routing allows the system to process multiple signal types simultaneously, enhancing throughput and the ability to handle various communication protocols, especially in environments with a wide range of wireless signal types and standards.

In various implementations, control module 214 may be coupled to amplifier 202. The term "control module" may refer to a device responsible for managing and regulating the operations of other components within a system (e.g., receiver 200). Control module 214 may be configured to perform various functions, such as automatic gain control (AGC), signal strength measurement, adaptive frequency management, and/or the like. For instance, control module 214 may be configured to dynamically adjust the signal processing parameters (e.g., the gain applied to the first signal) to maintain optimal signal levels for subsequent processing.

Depending on the implementation, control module 214 may be configured to measure signal strengths at one or more nodes. For instance, control module 214 may be configured to measure a first signal strength at first node 220. As an example, the first signal strength may be associated with a first frequency range. The first signal strength may include a wideband RSSI. The term "received signal strength indicator" or "RSSI" may refer to a measurement of the power present in a received signal. The wideband RSSI measures the total power of all signals (e.g., noise, interference, broadcast signals) present across a broad frequency range, providing an overall assessment of signal conditions for identifying strong signal presence and widespread interference.

In some embodiments, control module 214 may be configured to measure a second signal strength at second node 222. The second signal strength may be associated with a second frequency range. The second frequency range may be narrower than the first frequency range. For example, the second signal strength may include a narrowband RSSI, which measures the signal strength within a narrow frequency range or a selected frequency band, allowing for detailed assessments of channel quality and availability for communication. In other examples, control module 214 may be configured to measure a third signal strength at third node 224. The third signal strength may include a digital RSSI, which measures the power of a digital signal. The digital RSSI may be obtained after one or more digital processing stages, such as filtering, decimation, digital down conversion, and/or the like. Digital RSSI facilitates the evaluation of signal integrity and quality after digital processing, assisting in adjusting digital processing parameters to improve signal reception and digital gain control. In certain embodiments, control module 214 may be configured to a gain of amplifier 202 based at least on the first signal strength, the second signal strength, and the third signal strength.

In various implementations, analyzer 216 may be coupled to and operate in conjunction with receiver 200. The term "analyzer" may refer to a device configured to analyze the spectral composition of electronic signals. For instance, analyzer 216 may be configured to provide a visual representation and comprehensive analysis of the signal characteristic across the bandwidth. In some examples, analyzer 216 takes the digital signal from the receiver and computes the power spectral density, offering insights into the power distribution over the frequency spectrum. Analyzer 216 helps to identify the presence of undesired signals and assists in making informed decisions about frequency allocation, thereby facilitating more efficient spectrum management. In some implementations, receiver 200 and analyzer 216 are integrated into a single chip, streamlining the design and minimizing the physical footprint. This on-chip integration enhances the efficiency of the receiver system by reducing signal loss and latency, making it beneficial for applications requiring fast and accurate spectral analysis.

In some examples, control module 214 may be coupled to analyzer 216. The output of analyzer 216 may be provided to control module 214 to make informed decisions. For instance, if analyzer 216 identifies a frequency band with high interference levels, control module 214 can adjust the gain specifically for signals within that band to minimize the impact of interference on signal quality. If analyzer 216 detects an underutilized band with low signal strength, control module 214 can increase the gain for signals in that band to enhance reception. This synergistic relationship enables receiver 200 to adapt dynamically to changing RF conditions, optimizing both the reception quality of current signals and the system's overall spectral efficiency.

In various embodiments, analyzer 216 may be coupled to firmware engine 218. Firmware engine 218 may process the spectral data output from analyzer 216 for comprehensive signal analysis and system management. For instance, firmware engine 218 may act as a central controller of receiver 200 and manage the hardware components and parameter settings based on the spectral representation provided by analyzer 216. Firmware engine 218 may also provide a user interface for the operator to monitor and control the receiver 200, such as adjusting the frequency range, resolution bandwidth, and detection threshold. By leveraging data from analyzer 216, firmware engine 218 may conduct frequency allocation and interference management to optimize spectrum use and improve communication quality. Depending on the implementation, firmware engine 218 may support real-time spectrum analysis, allowing the system to adapt to rapid changes in the RF environment.

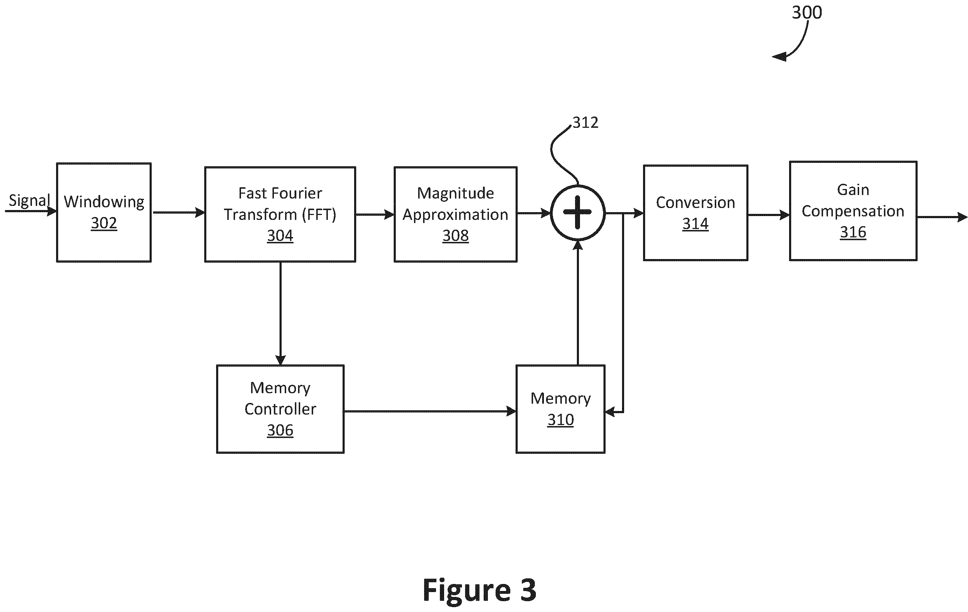

Figure 3 is a simplified diagram illustrating an analyzer 300 according to the embodiments of the subject technology. This diagram merely provides an example, which should not unduly limit the scope of the claims. One of ordinary skill in the art would recognize many variations, alternatives, and modifications. In various embodiments, analyzer 300 may be coupled to a receiver (e.g., receiver 200 of Figure 2) and receive input signals from the receiver to perform spectrum analysis, assessing the frequency and power characteristics of the received signal. The analyzer may be integrated with a receiver as part of a unified system or may operate as a separate module within a larger system. In some cases, the receiver and analyzer 300 may be integrated into a single chip to minimize the physical footprint and streamline signal transmission paths.

In various embodiments, analyzer 300 may receive a first signal from the receiver. For instance, the first signal may include In-Phase (I) and Quadrature (Q) data, which represents both the magnitude and the angle of the signal. The I/Q data may be sourced directly from the output of an ADC of the receiver and contain raw signal data that can be used for demodulation and interpretation. In some implementations, analyzer 300 may be configured to translate raw I/Q data to spectral data to perform frequency domain analysis on the received signals, offering a detailed analysis of frequency content and power distribution within the spectrum. For example, spectral data may show the presence of noise, interference, modulation, harmonics, and other features that affect the signal quality and performance. The spectral analysis enables the detection of signal anomalies and available communication channels, facilitating enhanced signal clarity and integrity for improved wireless communication performance.

At module 302, a windowing function may be applied to the first signal. For example, a windowing function may be used to reduce the effects of discontinuities in a signal. For example, a windowing function comprises a weighting function that tapers the signal to nearly zero at the beginning and end of the sampling period, which reduces the impact of abrupt changes or cuts in the time-domain signal that can lead to spectral leakage. Spectral leakage occurs when energy from one frequency bin "leaks" into another, usually due to the finite time duration of the signal being transformed. Spectral leakage may cause the power of the signal to spread across the frequency spectrum, creating artificial components that are not present in the original signal.

As an example, the first signal may include 16-bit I/Q samples, which are complex numbers that represent both the magnitude and angle of the signal. A windowing function may be applied to each I/Q sample by multiplying it by a corresponding window value. This process helps to preserve the spectral integrity of the signal, allowing for a more accurate representation of its frequency components. Depending on the implementation, the window values may be stored in a lookup table or calculated on the fly. The windowing function may include, without limitation, a rectangular window, a Hanning window, a Gaussian window, a Blackman-Harris window, and/or the like.

In various implementations, module 304 may apply a Fast Fourier Transform (FFT) to the windowed signal. For instance, module 304 may generate a second signal based on the first signal through an FFT. The first signal may include a time-domain signal and the second signal may include a frequency-domain signal. For instance, the term "time-domain signal" may refer to a representation of a signal's amplitude as it varies over time, illustrating the signal's behavior and changes in amplitude at different timestamps. The term "frequency-domain signal" may refer to a representation of a signal's amplitude distributed across various frequencies, indicating the signal's spectral composition and the intensity of its frequency components. In some examples, the second signal may include a first frequency component. The term "frequency component" may refer to a component of a frequency-domain signal that corresponds to a certain frequency within the overall spectrum. The term "Fast Fourier Transform" may refer to an algorithm that translates the time-domain signal into a frequency-domain representation by computing the Discrete Fourier Transform (DFT) and its inverse. This transformation facilitates the observation and analysis of the signal's frequency components, enabling the identification and quantification of individual frequency components within complex signals.

In some embodiments, the FFT operation decomposes the signal into multiple (e.g., 32, 64, 128, 256, etc.) frequency bins, each representing a specific frequency component within the signal's total bandwidth. The output of the FFT is a sequence of complex numbers, with each number indicating the amplitude and phase of the signal at the corresponding frequency bin. For example, the magnitude of each complex number represents the power or amplitude of the signal, and the angle represents the phase or delay of the signal. By executing the FFT, analyzer 300 can identify and analyze individual frequency components, providing valuable information for tasks such as power estimation, signal identification, and interference analysis.

According to some embodiments, module 308 may be configured to calculate the magnitude of the FFT output. The term "magnitude" may refer to the strength or intensity of a frequency component within the signal, which represents the signal's power at the corresponding frequency. For example, module 308 may be configured to calculate a first magnitude associated with the first frequency component at a first timestamp. The first magnitude may be calculated by converting the complex numbers from the FFT into real values that represent the strength or power of the signal at the corresponding frequency. The magnitude value quantifies how much signal is present at a specific frequency, serving as an important metric for power estimation. In some embodiments, module 308 may be configured to calculate a second magnitude associated with the first frequency component at a second timestamp. The temporal information (e.g., the first timestamp and the second timestamp) enables analyzer 300 to track spectral changes over time, allowing for dynamic spectral analysis by accounting for both transient and persistent changes across the spectrum. Depending on the implementation, the first timestamp and the second timestamp may be characterized by a predetermined time interval (e.g., 5 µs, 10 µs, 20 µs, 40 µs, etc.).

In various implementations, the magnitude values calculated at module 308 may be accumulated over multiple FFT frames. For instance, the first magnitude and the second magnitude may be stored in memory 310. Memory 310 may include volatile memory and/or non-volatile memory, such as random-access memory (RAM), read-only memory (ROM), flash memory, and/or the like. For instance, memory 310 may use volatile memory for fast access and non-volatile memory for long-term data retention and recovery. In some cases, memory controller 306 may be coupled to memory 310 and configured to manage the communication and data transfer between memory 310 and other components of analyzer 300. Memory controller 306 may include, without limitation, a memory interface, a memory buffer, a memory arbiter, a memory timing generator, and/or the like.

In some embodiments, module 312 may retrieve the first magnitude and the second magnitude from memory 312 and calculate a third magnitude associated with the first frequency component. For example, the third magnitude may be determined by calculating an average based on at least the first magnitude and the second magnitude, effectively smoothing out the signal's frequency spectrum over time. The accumulation process-by integrating magnitude values across successive FFT frames-reduces random noise and minimizes the impact of transient spectral artifacts, leading to a stable and reliable spectral representation. In some cases, analyzer 300 may generate a spectrum representation of the first signal based at least on the third magnitude. Through magnitude accumulation and temporal averaging, the spectrum representation improves power estimation for optimizing frequency allocation and enhancing overall communication quality. This process not only facilitates more efficient spectrum utilization but also supports advanced communication techniques, such as adaptive frequency hopping (AFH), RSSI calibration acceleration, AGC optimization, and/or the like.

In some implementations, module 314 may be configured to convert the third magnitude from a linear scale to a logarithmic (decibel) scale. This conversion facilitates an intuitive understanding and representation of the signal's power levels, as the logarithmic scale can more accurately reflect the wide dynamic range of signals within wireless communication environments. The logarithmic representation is useful for visualizing the dynamic range of the spectrum, allowing for informed decision-making in frequency allocation and network optimization. Additionally, the decibel scale simplifies the process of setting threshold levels for signal detection and interference avoidance, further streamlining spectrum management tasks.

Depending on the implementation, module 316 may be configured to perform gain compensation, adjusting the signal's magnitude based on the gain applied at various stages of the receiver. For instance, the third magnitude may be adjusted based on a gain applied to the first signal at the input terminal. This process aligns the measured signal power with its original value by accounting for the amplification or attenuation introduced by the receiver's components. By compensating for changes in gain, module 316 maintains the integrity of the power estimation across the frequency spectrum, regardless of the AGC's dynamic adjustments in response to fluctuating signal conditions. Gain compensation allows for a direct comparison of signal strengths across different conditions and periods, providing a consistent basis for spectrum analysis. In various examples, module 316 coordinates closely with the receiver's control module (e.g., control module 214 of Figure 2) to dynamically adjust gain settings based on the spectral analysis provided by analyzer 300. This collaboration enables the system to maintain optimal signal-to-noise ratios (SNRs) and to adapt to varying RF conditions by modifying receiver gain in real time.

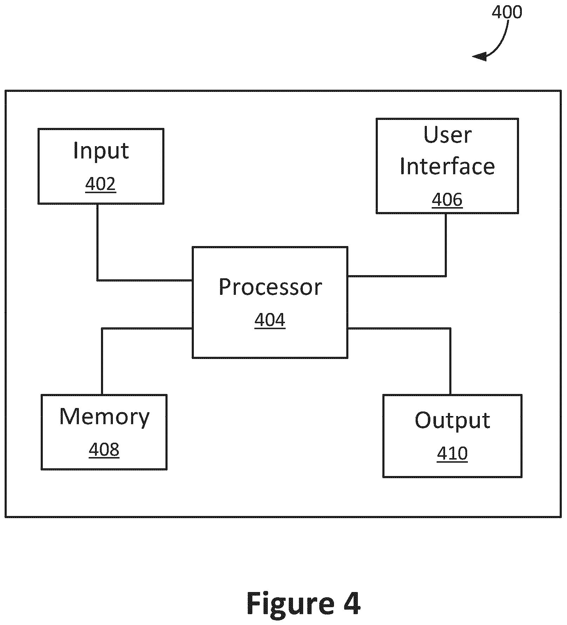

Figure 4 is a simplified diagram illustrating an analyzer 400 according to the embodiments of the subject technology. This diagram merely provides an example, which should not unduly limit the scope of the claims. One of ordinary skill in the art would recognize many variations, alternatives, and modifications.

As shown, analyzer 400 may include input 402, which may receive signals from various sources. For instance, input 402 may be configured to receive a first signal from a receiver. The first signal may include In-Phase (I) and Quadrature (Q) data generated by a receiver (e.g., receiver 200 of Figure 2). Analyzer 400 may be configured to translate raw I/Q data to spectral data to perform frequency domain analysis on the received signals, offering a detailed analysis of frequency content and power distribution within the spectrum.

In various implementations, analyzer 400 further includes processor 404 coupled to input 402. Processor 404 may include, without limitation, a microprocessor, a microcontroller, a digital signal processor (DSP), a field-programmable gate array (FPGA), an application-specific integrated circuit (ASIC), or other devices that perform the signal processing algorithms and functions. Depending on the implementation, processor 404 may also incorporate specialized hardware accelerators to enhance specific tasks like FFT computation or magnitude calculation, ensuring real-time processing capabilities for complex signal environments.

In some examples, processor 404 may be configured to apply a windowing function to the first signal to reduce discontinuities and abrupt changes in the signal. Processor 404 may be further configured to generate a second signal based on the first signal through an FFT. For instance, the first signal may include a time-domain signal and the second signal may include a frequency-domain signal. In some examples, the second signal may include a first frequency component. Processor 404 may calculate one or more magnitude values associated with the first frequency component. For example, processor 404 may be configured to calculate a first magnitude associated with the first frequency component at a first timestamp. The first magnitude may be calculated by converting the complex numbers from the FFT into real values that represent the strength or power of the signal at the corresponding frequency. In some embodiments, processor 404 may be configured to calculate a second magnitude associated with the first frequency component at a second timestamp. Depending on the implementation, the first timestamp and the second timestamp may be characterized by a predetermined time interval (e.g., 5 µs, 10 µs, 20 µs, 40 µs, etc.).

According to some embodiments, the magnitude values calculated by processor 404 may be accumulated over multiple FFT frames. For instance, memory 408 may be coupled to processor 404 and configured to store the first magnitude and the second magnitude. Memory 408 may include volatile memory and/or non-volatile memory, such as random-access memory (RAM), read-only memory (ROM), flash memory, and/or the like. Memory 408 may use volatile memory for fast access and non-volatile memory for long-term data retention and recovery. For instance, volatile memory may be configured to store intermediate calculation results and instructions currently being executed by processor 404. Non-volatile memory may be configured to store the spectrum analysis results, user preferences, and/or software that includes signal processing algorithms and firmware updates. In some cases, memory 408 may be configured to store instructions that perform various signal processing functions, such as FFT calculations, digital filtering, mathematical operations, and/or the like. In some embodiments, the memory's architecture may be designed to enhance the efficiency of data flow between processor 404 and memory 408. For instance, memory 408 may further include a memory controller configured to manage the communication and data transfer between memory 408 and processor 404.

In various implementations, processor 404 may retrieve the first magnitude and the second magnitude from memory 408 and calculate a third magnitude associated with the first frequency component. For example, the third magnitude may be determined by calculating an average based on at least the first magnitude and the second magnitude. Processor 404 may generate a spectrum representation of the first signal based at least on the third magnitude, which improves power estimation for optimizing frequency allocation and enhancing overall communication quality. In some cases, processor 404 may be configured to convert the third magnitude from a linear scale to a logarithmic scale to facilitate understanding and representation of the signal's power estimation. In other examples, processor 404 may be configured to perform gain compensation by adjusting the signal's magnitude based on the gain applied at various stages of the receiver. Depending on the application, processor 404 may support various advanced communication techniques, such as adaptive frequency hopping (AFH), RSSI calibration acceleration, AGC optimization, and/or the like.

In some embodiments, user interface 406 may be coupled to processor 404. User interface 406 allows for real-time feedback and control, enabling users to interact with analyzer 400. For example, user interface 406 may include a display, such as a liquid crystal display (LCD), a light-emitting diode (LED), or an organic light-emitting diode (OLED), allowing users to view spectral representation and analysis results. User interface 406 may further include, without limitation, a keyboard, a mouse, a touch screen, a speaker, a microphone, or other input and output devices that allow users to adjust the operational settings and parameters based on specific applications and user preferences.

In various embodiments, analyzer 400 further includes output 410 coupled to processor 404. Output 410 may be configured to send the second signal or analysis results to other components or external devices. In some cases, output 410 may be configured to output the spectrum representation generated by processor 404. Output 410 may include, without limitation, a connector, a cable, a transmitter, a modulator, or other devices that help to transmit and encode the signal. Depending on the implementation, output 410 may support various communication protocols and standards, such as USB, HDMI, Ethernet, Wi-Fi, Bluetooth, and/or the like.

While the above is a full description of the specific embodiments, various modifications, alternative constructions, and equivalents may be used. Therefore, the above description and illustrations should not be taken as limiting the scope of the subject technology which is defined by the appended claims.

## Claims

1. An apparatus comprising:
an input configured to receive a first signal;
a processor coupled to the input, the processor being configured to:
generate a second signal based on the first signal, the second signal comprising a first frequency component;
calculate a first magnitude associated with the first frequency component at a first timestamp;
calculate a second magnitude associated with the first frequency component at a second timestamp;
calculate a third magnitude associated with the first frequency component by calculating an average based at least on the first magnitude and the second magnitude; and
a memory coupled to the processor, the memory being configured to store at least the first magnitude and the second magnitude.

2. The apparatus of claim 1, wherein the processor is further configured to apply a windowing function to the first signal.

3. The apparatus of claim 1 or 2, further comprising a memory controller configured to manage data transfer between the processor and the memory.

4. The apparatus of any of the preceding claims, wherein the first signal comprises a time-domain signal and the second signal comprises a frequency-domain signal.

5. The apparatus of any of the preceding claims, wherein the processor is further configured to generate a spectrum representation of the first signal based at least on the third magnitude, and/or
wherein the processor is further configured to convert the third magnitude from a linear scale to a logarithmic scale, and/or
wherein the processor is further configured to adjust the third magnitude based a gain applied to the first signal.

6. An apparatus comprising:
a receiver configured to receive a first signal, the receiver comprising:
an amplifier configured to amplify the first signal;
a first filter coupled to the amplifier through a first node, the first filter being configured to filter the first signal;
an analog-to-digital converter (ADC) coupled to the first filter through a second node; and
a control module configured to measure a first signal strength at the first node and a second signal strength at the second node; and
an analyzer coupled to the receiver, the analyzer being configured to:
generate a second signal based on the first signal, the second signal comprising a first frequency component;
calculate a first magnitude associated with the first frequency component at a first timestamp;
calculate a second magnitude associated with the first frequency component at a second timestamp; and
calculate a third magnitude associated with the first frequency component by calculating an average based at least on the first magnitude and the second magnitude.

7. The apparatus of claim 6, wherein the receiver further comprises a signal processor coupled to the ADC through a third node, and the control module is configured to measure a third signal strength at the third node.

8. The apparatus of claim 7, wherein the control module is configured to adjust a gain of the amplifier based at least on the first signal strength, the second signal strength, and the third signal strength.

9. The apparatus of any of claims 6 to 8, wherein:
the ADC is configured to convert the first signal into a digital signal; and
the receiver further comprises a second filter coupled to the ADC, the second filter is configured to reduce a sampling rate of the digital signal.

10. The apparatus of any of claims 6 to 9, wherein the analyzer further comprises a memory configured to store at least the first magnitude and the second magnitude, and/or
wherein the analyzer is further configured to generate a spectrum representation of the first signal based at least on the third magnitude.

11. The apparatus of any of claims 6 to 10, wherein the first signal strength is associated with a first frequency range, the second signal strength is associated with a second frequency range, and the second frequency range is narrower than the first frequency range.

12. The apparatus of any of claims 6 to 11, wherein the control module is coupled to the analyzer.

13. An apparatus comprising:
an input configured to receive a first signal;
a processor coupled to the input, the processor being configured to:
generate a second signal based on the first signal, the second signal comprising a first frequency component;
calculate a first magnitude associated with the first frequency component at a first timestamp;
calculate a second magnitude associated with the first frequency component at a second timestamp;
calculate a third magnitude associated with the first frequency component by calculating an average based on at least the first magnitude and the second magnitude; and
generate a spectrum representation of the first signal based at least on the third magnitude;
a memory coupled to the processor, the memory being configured to store at least the first magnitude and the second magnitude; and
an output coupled to the processor, the output being configured to output the spectrum representation.

14. The apparatus of claim 13, further comprising a memory controller configured to manage data transfer between the processor and the memory.

15. The apparatus of any of the preceding claims, wherein the first timestamp and the second timestamp are **characterized by** a predetermined time interval.
